# NEW EUROPEAN PATENT SPECIFICATION

(11) **EP 2 469 204 B2**
(45) Date of publication and mention of the opposition decision: **04.06.2025**
(45) Mention of the grant of the patent: 29.08.2018
(21) Application number: 11194455.9
(22) Date of filing: 20.12.2011
(51) Int. Cl.: F25D 23/06, B29C 49/54, B29C 51/06, B29C 51/10

(54) **A cooling device with a reinforced inner liner and production method for it**
Kühlvorrichtung mit verstärkter Innenauskleidung und Herstellungsverfahren dafür
Dispositif de refroidissement avec revêtement interne renforcé et procédé de production associé

(30) Priority: 24.12.2010 TR 201010842
(43) Date of publication of application: 27.06.2012
(73) Proprietor: BSH Hausgeräte GmbH, 81739 München (DE)
(72) Inventor: Asaroglu, Emin Hikmet, 59850 Corlu (TR); Cinici, Bilal, 59501 Tekirdag (TR); Kara, Caner, 59850 Tekirdag (TR)

(56) References cited:
- EP-A1- 1 038 145
- FR-E- 68 736
- KR-A- 20010 060 723
- KR-A- 20100 022 742
- KR-U- 970 044 864
- US-A1- 2010 326 122
- US-B1- 6 574 984

## Description

### TECHNICAL FIELD

The present invention relates to a cooling device production method for producing cooling devices comprising an inner liner; an outer frame parallel to said inner liner; and a door with insulation layer provided in between.

### KNOWN STATE OF THE ART

In order to cover a cabinet of cooling devices in an openable manner, thermally insulated doors are used. The cooling device door comprises an inner liner which is in planar form and which is made of plastic material; and an outer frame which is connected to the inner liner so as to have a space in between. An expandable insulation material, for instance polyurethane, fills the space between the inner liner and the outer frame and thereby an insulation layer is formed. Since the inner liner is in general produced by means of the thermoforming method, it has a thin walled structure. On the inner liner, there are support parts which extend outwardly for carrying the shelves. After the door is manufactured, together with the accessories, the shelves are also engaged to the tabs in the support parts and thereby they are fixed. However, because of expanding materials like polyurethane which form pressure, when the dimension of the support part becomes non-precise, the shelf can not be seated to the place thereof with the desired precision. In this case, the cooling device door becomes useless and as a result of this, the manufacture costs increase. The document US 6574 984 B1 discloses a cooling device according to the above mentioned state of the art.

### BRIEF DESCRIPTION OF THE INVENTION

The object of the present invention is to provide dimension precision in carrying the shelf of the cooling device door.

In order to realize the abovementioned objects, the present invention is a cooling device production method for producing a cooling device comprising an insulation layer which expands and places between a plastic based inner liner and an outer frame so as to apply pressure; at least two mutual support parts of the inner liner which are formed so as to extend outwardly in transverse direction and which are in shell form; a door which is formed by the forming of an inner wall of the support parts facing each other and wherein the inner wall comprises at least one tab. The subject matter invention comprises pluralities of spaced ribs which are formed by providing a predetermined form to the inner wall and which are provided in the vicinity of the tab the support parts. In this case, because of the pressure applied to the inner walls during the placement of the insulation layer between the outer frame and the inner liner, the inflation is prevented by means of the ribs placed in the vicinity of the tab in the support part. By means of this, for instance, it becomes possible to seat the shelf, which has a predetermined length so as to be assembled to the tabs, onto the tabs between the support parts. Otherwise, because of the inflation in the support parts, since the tab size and/or the space between the tabs change, the shelf can not be seated.

The rib comprises an embossment form extending in the transverse direction. The embossment form provides more plastic-based materials to exist around the tab, and it increases rigidity in the vicinity of the tab.

The ribs extend between the tab's rear edge facing the inner liner and a panel of the inner liner parallel to the outer frame. In this case, in the inner liner's support part which extends beginning from the panel, the total amount of plastic material existing in the region up to the part where the tab exists is increased.

The rear edge contour follows the ribs' line facing the rear edge. Thus, along the contour formed by the ribs, the rear edge is elongated and the connection between the tab and the support part becomes firmer and more rigid.

In a preferred embodiment of the present invention, the ribs comprise one each bar-like form, which are parallel and spaced with respect to each other. During the production of the inner liner, this particularly provides the bars to be pulled in the extension direction and to be removed from the mould which the inner liner covers.

In another preferred embodiment of the present invention, the ribs' two mutual edges in transverse direction comprise rounded corners. In this case, during the production of the inner liner, inner liner can be easily released from a projection on a mould against a rib. In order to reach said objects, the present invention is a cooling device production method for producing a cooling device according to claim 1. In this case, during the pulling of the inner liner from the thermoform mould, the rib is unlikely to be obstructed by the mould. Thus, ribs are formed on the inner liner without the need for a movable core.

### BRIEF DESCRIPTION OF THE FIGURES

In order for the embodiment and the advantages of the subject matter invention to be understood in the best manner with the additional elements, it has to be evaluated with the figures explained below.

In Figure 1, the frontal view of a cooling device door comprising a rib is given.

In Figure 2, the lateral cross sectional view along the A-A axis illustrated in Figure 1 is given.

In Figure 3, the zoomed view of detail B illustrated in Figure 2 is given.

In Figure 4, the lateral view of the thermoform mould used in the production of an inner liner carrying a representative embodiment of the subject matter rib is given.

### THE DETAILED DESCRIPTION OF THE INVENTION

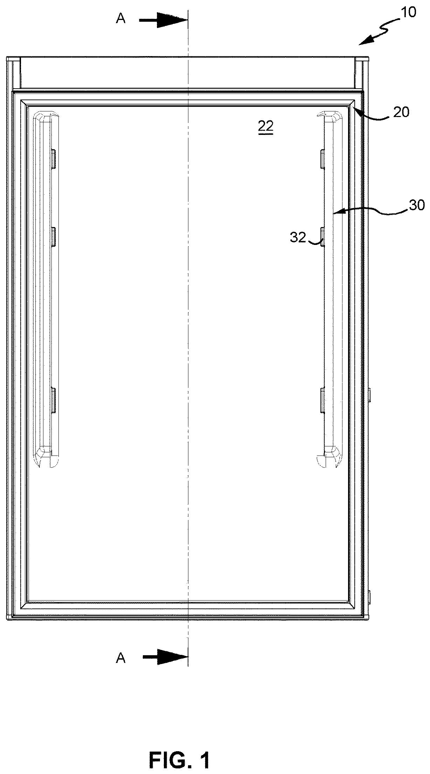

In Figure 1, a door (10) of a cooling device (not illustrated in the figure) is illustrated. The door (10) comprises an inner liner (20) which is made of a plastic based material and an outer frame (50) where the inner liner (20) is connected along the edges thereof. The inner liner (20) comprises a panel (22) and a support part (30) which is provided thereon in the form of an orthogonal projection. The support part (30) extends in a parallel and adjacent manner to both of the mutual orthogonal edges of the inner liner (20). A carrier part (40) is formed in a projection form on the support part's (30) inner wall (32) facing the panel (22) inner side and facing each other. The carrier part (40) provides assembly of shelf or similar keeping members to the door (10) or the assembly of the auxiliary members (not illustrated in the figure) like guide.

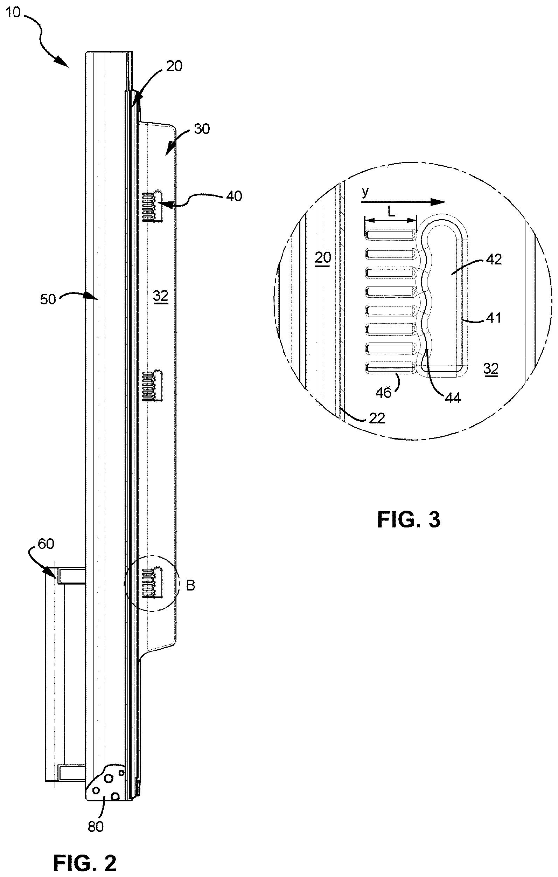

In Figure 2, the cross section of the door (10) along the A-A axis is illustrated. A door arm (60) of the door (10) is fixed on an outer frame (50). The support part (30), which exists on the right hand side in Figure 1, is illustrated in Figure 2. The support part (30) has an ear-like form. The support part (30) extends in an orthogonal manner to this, so as to join the panel (22) of the inner liner (20). The carrier part (40) is placed one above the other so as to have distance in between on the inner wall (32).

In Figure 3, the zoomed view of the carrier part (40) is given. The inner wall (32) of the support part (30) formed by the inner liner (20) is embossed outwardly and thereby a tab (42) is formed. The tab (42) has a planar front edge (41) and a rear edge (44) which is in the opposite direction. The front and the rear edge (41, 44) have a distance in between. The rear edge (44) has an undulated contour. Between the tab (42) and the inner liner (20) panel (22), pluralities of ribs (46) are formed in the support part (30). The form of the ribs (46) is configured in a manner extending in the transverse direction (y) of the support part (30). The ribs (46), which are in bar form, extend in an orthogonal manner to the rear edge (44) in a region limited by the rear edge (44) distance, so as to have a distance in between. There is a distance between the ribs (46) and the rear edge (44).

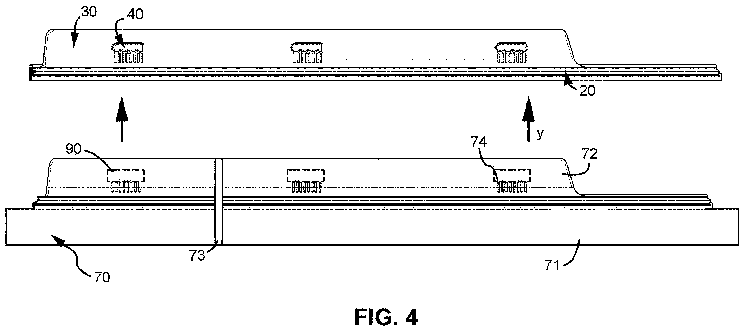

In Figure 4, a representative embodiment of a thermoform mould (70) where the production of the inner liner (20) is provided is illustrated. The thermoform mould (70) comprises a body (71), and a projection (72) formed outwardly on the upper part of the body (71). Pluralities of projections (74) are formed on the lateral surface of the projection (72). The projections (74) extend in the transverse direction (y) with respect to the body (71). There is a movable core (90) at the thermoform mould (70) body (71). Moreover, in the thermoform mould (70), there is a discharge hole (73) for providing vacuum during the thermoform process.

A plastic panel (not illustrated in the figure) is heated and smoothed and it is inflated by means of air flow. Afterwards, it is seated onto the thermoform mould (70) and the air is discharged. Meanwhile, the movable core (90) advances outwardly from the projection (72) and it forms the tab (42). At the same time, the projections (74) form the rib (46). The inner liner (20), which is formed by pulling back the movable core (90), is removed from the thermoform mould (70) in the transverse direction (y). Since the projection (74) extends in the transverse direction (y), the inner liner (20) which is made of plastic material can be easily removed from the mould by a slight bending.

The rib (46) height is less than the tab (42) height. In this manner, the rib (46) may be formed by semi-circler embossments whose height is smaller than the half of the tab (42) height or the rib (46) may be formed by embossments in other forms whose edges are rounded so as not to give damage to the inner liner (20) during the removal of the inner liner (20) in the transverse direction. The ribs (46) can be placed to the support part (30) so as to comprise offset with respect to each other or so as to be at different lengths or so as to have equal lengths.

**REFERENCE NUMBERS**

| | | | |
|---|---|---|---|
| 10 | Door | 47 | Edge |
| 20 | Inner liner | 50 | Outer frame |
| 22 | Panel | 60 | Door handle |
| 30 | Support part | 70 | Thermoform mould |
| 32 | Inner wall | 71 | Body |
| 40 | Carrier part | 72 | Projection |
| 41 | Front edge | 73 | Discharge hole |
| 42 | Tab | 74 | Projection |
| 44 | Rear edge | 80 | Insulation layer |
| 46 | Rib | 90 | Movable core |
| | | y | Transverse direction |

## Claims

1. A cooling device production method for producing a cooling device comprising an insulation layer (80) which expands and places between a plastic based inner liner (20) and an outer frame (50) so as to apply pressure; at least two mutual support parts (30) of the inner liner (20) which are formed so as to extend outwardly in transverse direction (y) and which are in shell form; a door (10) which is formed by the forming of an inner wall (32) of the support parts (30) facing each other and wherein the inner wall (32) comprises at least one tab (42), comprising pluralities of spaced ribs (46) which are formed by giving a predetermined form to the inner wall (32) and which are provided in the vicinity of the tab (42) in the support parts (30), wherein the tab (42) has a planar front edge (41) and a rear edge (44) which is in the opposite direction, wherein the front edge (41) and the rear edge (44) have a distance in between, wherein the rear edge (44) has an undulated contour, wherein the rib (46) comprises an embossment form extending in the transverse direction (y), wherein the ribs (46) extend between the tab's (42) rear edge (44) facing the inner liner (20), and the panel (22) of the inner liner (20) parallel to the outer frame (50), wherein the rear edge (44) contour follows the ribs' (46) line facing the rear edge (44), comprising the steps of heating a plastic based panel (22) on a thermoform mould (70) in opposite form of the inner liner (20) and covering said plastic based panel (22) onto the thermoform mould (70); forming the rib (46) together with the inner liner (20) by means of a projection (74) provided on the thermoform mould (70); forming the tab (42) and exiting the tab (42) by a movable core (90), which applies pressure to the support part (30); pulling and removing the inner liner (20) in the transverse direction (y) which is essentially orthogonal to the thermoform mould (70).

## Patentansprüche

1. Verfahren zur Herstellung einer Kühlvorrichtung, umfassend eine Isolationsschicht (80), die sich ausdehnt und zwischen einer Innenauskleidung (20) auf Kunststoffbasis und einem Außenrahmen (50) platziert ist, um dort Druck auszuüben; mindestens zwei gegenseitige Stützteile (30) der Innenauskleidung (20), die sich schalenförmig in Querrichtung (y) nach außen erstrecken; eine Tür (10), die durch Bilden einer Innenwand (32) der einander zugewandten Stützteile (30) gebildet wird, wobei die Innenwand (32) mindestens eine Lasche (42) umfasst, umfassend eine Vielzahl von beabstandeten Rippen (46), die durch Ausbilden einer vorbestimmten Form an der Innenwand (32) gebildet werden und die im Bereich der Lasche (42) in den Trägerteilen (30) bereitgestellt sind, wobei die Lasche (42) eine ebene Vorderkante (41) und eine in entgegengesetzter Richtung liegende Hinterkante (44) aufweist, wobei die Vorderkante (41) und die Hinterkante (44) einen Abstand aufweisen, wobei die Hinterkante (44) eine wellenförmige Kontur aufweist, wobei die Rippe (46) eine sich in Querrichtung (y) erstreckende Prägungsform aufweist, wobei sich die Rippen (46) zwischen der der Innenauskleidung (20) zugewandten Hinterkante (44) der Lasche (42) und der Platte (22) der Innenauskleidung (20) parallel zum Außenrahmen (50) erstrecken, wobei die Kontur der Hinterkante (44) der Rippenlinie (46) zur Hinterkante (44) folgt, umfassend die Schritte des Erhitzens einer Kunststoffbasisplatte (22) auf einer Thermoform (70) in entgegengesetzter Form der Innenauskleidung (20) und des Überdeckens der Kunststoffbasisplatte (22) auf die Thermoform (70); Bilden der Rippe (46) zusammen mit der Innenauskleidung (20) mittels eines an der Thermoform (70) vorgesehenen Vorsprungs (74); Bilden der Lasche (42) und Austreten aus der Lasche (42) durch einen beweglichen Kern (90), der Druck auf das Trägerteil (30) ausübt; Herausziehen und Entfernen der Innenauskleidung (20) in der Querrichtung (y), die im Wesentlichen orthogonal zur Thermoform (70) ist.

## Revendications

1. Procédé de production d'un appareil de réfrigération pour la production d'un appareil de réfrigération comprenant une couche isolante (80) qui s'étend et se trouve entre un revêtement intérieur à base de plastique (20) et une structure extérieure (50) de sorte à exercer une pression ; au moins deux pièces de support communes (30) du revêtement intérieur (20) formées de sorte à s'étendre vers l'extérieur dans le sens transversal (y) et en forme de coque ; une porte (10) constituée par le formage d'une paroi intérieure (32) des pièces de support (30) se faisant face et dans lequel la paroi intérieure (32) comprend au moins une attache (42), comprenant des pluralités de nervures espacées (46) formées en conférant une forme prédéterminée à la paroi intérieure (32) et prévues à proximité de l'attache (42) dans les pièces de support (30), dans lequel l'attache (42) a un bord avant plan (41) et un bord arrière (44) dans le sens opposé, dans lequel une distance sépare le bord avant (41) et le bord arrière (44), dans lequel le bord arrière (44) a un contour ondulé, dans lequel la nervure (46) comprend une forme en relief s'étendant dans le sens transversal (y), dans lequel les nervures (46) s'étendent entre le bord arrière (44) de l'attache (42) faisant face au revêtement intérieur (20) et le panneau (22) du revêtement intérieur (20) parallèle à la structure extérieure (50), dans lequel le contour du bord arrière (44) suit la ligne de nervures (46) faisant face au bord arrière (44), comprenant les étapes de chauffage d'un panneau à base de plastique (22) sur un moule de thermoformage (70) de forme opposée au revêtement intérieur (20) et dépose dudit panneau à base de plastique (22) sur le moule de thermoformage (70) ; formage de la nervure (46) conjointement au revêtement intérieur (20) au moyen d'une projection (74) prévue sur le moule de thermoformage (70) ; formage de l'attache (42) et extraction de l'attache (42) via un noyau mobile (90), qui exerce une pression sur la pièce de support (30) ; traction et retrait du revêtement intérieur (20) dans le sens transversal (y) essentiellement orthogonal par rapport au moule de thermoformage (70).
